(19) Europäisches Patentamt
European Patent Office
Office européen des brevets

(11) **EP 4 063 652 A1**

(12) **EUROPEAN PATENT APPLICATION**

(43) Date of publication:
28.09.2022 Bulletin 2022/39

(21) Application number: 21020250.3

(22) Date of filing: 06.05.2021

(51) International Patent Classification (IPC):
*F03G 7/10* *(2006.01)*

(52) Cooperative Patent Classification (CPC):
**F03G 7/107**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.03.2021 TR 202105448**

(71) Applicant: **Rehab Abd Elmonem Sadek**
**Istanbul (TR)**

(72) Inventor: **Rehab Abd Elmonem Sadek**
**Istanbul (TR)**

Remarks:
Amended claims in accordance with Rule 137(2) EPC.

(54) **GENERATION OF RENEWABLE AND CONTINUOUS ELECTRIC ENERGY BY RECYCLING OF POTENTIAL AND KINETIC ENERGY OF THE WEIGHT**

(57) The application discloses a device that generates renewable and continuous electric energy from a new source of renewable energy sources without any outer energy supply. The device recycles potential energy to generates kinetic energy of the weight, to generate continuous energy - without any loss - to keep a wheel in continuous movement to rotate a dynamo. The device treats the problem of energy losses to produce continuous energy by re-cycle the weights. The device elements of the application consists of three main elements: self-energy wheel generation, gear box and transmission and a suitable electric generator.

Rail shape of device

**Description**

**Introduction:**

The idea of the invention device is based on the generation of renewable and continuous electric energy from a new source of renewable energy sources, which depends on the recycling of potential energy and kinetic energy of the weight, to generate continuous energy by exchanging between the two energies - without any loos - to keep the wheel in continuous movement to rotate A Dynamo by a suitable Gear-box.

The device elements of the invention, consists of three main components, as shown in figure

1- Self-energy wheel generation (the scope of the invention)

2- Gearbox and transmission 3- The electric generator

**The New in the invention:**

Although humanity knew the generation of kinetic energy from the potential energy and thus the generation of electric energy in the past, through the dams on the streams of rivers, unfortunately, they couldn't re-exploit the water (material) again, which makes the process of obtaining energy depends on more water (which is sometimes depleted) or depends on streams (which is found in rare places) as well as the cost involved in building the dam, so our invention solves this problem by saving materials and coasts.

Otherwise, the device treats the losses which could be lost during the potential and kinetic exchanging process by piston injection oil system.

This self-energy wheel generates electrical energy in any place and with different capacities without the needing for fuel- according to the size of the wheel design- and saves huge amounts of money

**Counterintuitive:**

The invention is based on fixed and known laws, but it was able to provide free energy by harmonizing the laws of movement by the attached device details -in the explanation- which has not been reached until this time to provide energy to humanity without needing to dig wells, extract and transport fuel (all of this costs a lot of expenses)
Hydraulic Self-energy wheel device different than the self-rotation wheel, that self-rotation wheel could not able to generate energy to rotate the wheel without pushing start, also it cannot rotate another generator.

**_Short Discerption:**

Accordingly, the invention recycles to generate electric energy by the same amount of weight (itself) to re-use it in the process to obtain energy depends on changing the moment arm's length for the weights during rotation of the wheel, then the difference in the energy generated during the rotation process down produce a moment greater than the moment required to lift the same weights, the resultant force is the energy gained, which can be exploited through the gear-box to rotate the coil inside the generator.

To understand how does the moment arm's length change to produce different moment during wheel rotation?

Displacement of weights by internal pistons injection system.

Sequential, when the certain valve allows to a definite amount of pressured oil to extend the moment arm during rotating down then the moment of the wheel increases, after that, starting rotating up the moment arm length decreases because the other valve allows to re-inject the same amount of oil to the piston and so on.

The change in the moment arm length (dx)

Then the moment by F1 >F3 because of dx

$$dM1 = L1*w1$$

$$dM3 = L3*w3 \qquad \because w1 = w3 \Leftrightarrow w1 \qquad \because L1 = (r + dx)\sin\theta$$

$$\because L3 = r * \sin\theta$$

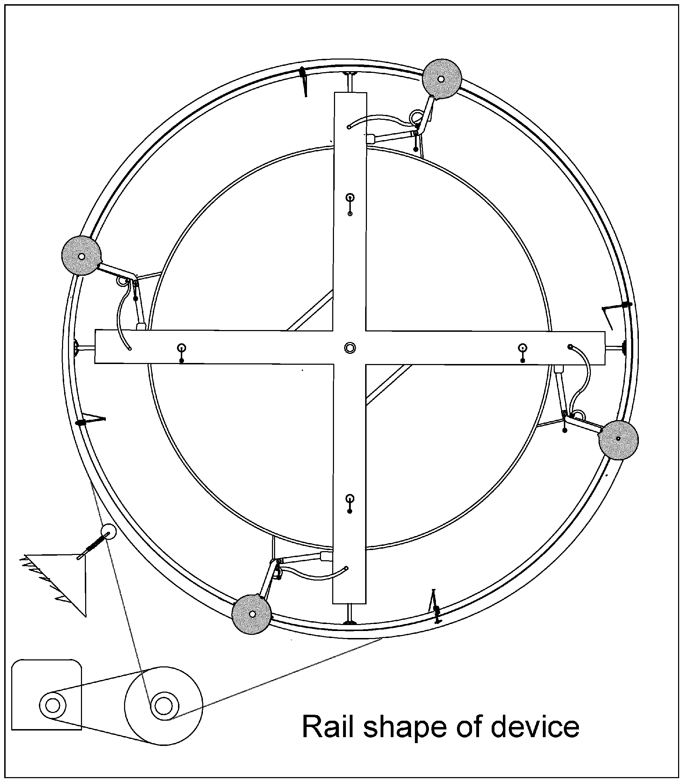

$$dM = dM1 - dM3$$
$$\because L1 - L3 = dx \text{ figure 1}$$

$$dM = (L1 - L3) * w1 * g \quad dM$$
$$= dx * \sin\theta * w * g$$

∫ dM = area under curve = the gain moment beats on a moment of inertia of its self and provides the wheel power to rotate then the remaining moment can be used to rotate suitable generator.

The value of gain energy depends on many factors as:

1-Radios of wheel.
2-Weights.
3-Wing arm length.
4-Kind and material of rolling.
5-The capacity of pistons.
6-Wheel weight.

**Summary:**

the invention device generates renewable and continuous electric energy from a new source of renewable energy sources without any outer energy supply and saves a lot of money.

The device recycles potential energy to generates kinetic energy of the weight, to generate continuous energy - without any loss - to keep a wheel in continuous movement to rotate A Dynamo.

The device treats the problem of energy losses to produce continuous energy by re-cycle the weights.

The device elements of the invention, consists of three main elements

1- Self- energy wheel generation (the scope of invention)

2-Gear box and transmission

3- The suitable electric generator

The device different than self-rotation wheel, that self-rotation wheel could not able to generate energy.

The device can be movable to serve anywhere and different size of energy loads.

**Claims**

1.  **Required to protect the flow subjects:**

1- **Hydraulic Self-energy wheel device.**
2- **The process of exchange the energy by the wheel and reusing the weight of the material to generate continuous kinetic energy without loss of energy.**
3- **Dynamic process through mutual pressure between the pistons included the device.**
4- **The valve depends on the position and the controlled amount of oil.**
1- **Hydraulic Self-energy wheel device**

Generate electric energy by the same amount of weight (itself) to re-use it in the process of obtaining energy depends on changing the moment arms for the weights during rotation of the wheel, then the difference in the energy generated during the rotation process down produce a moment greater than the moment required to lift the same weights, the resultant force is the energy gained, which can be exploited through the gearbox to rotate the coil inside the generator. The change of moment arm length due to gravity and displacement of weights by internal pistons injection system to continue the motion.

This self-energy wheel provides electrical energy in any place and with different capacities without the needing for fuel according to the size of the wheel design, and this saves huge amounts of money.

**1-Hydraulic Self-energy wheel device consisting of main elements such as:**

- Wheel
- Wings
- Weights
- Pistons
- Springs
- Axial rolling
- Valves
- More than 40 elements as shown in figure (1)

2. **The process of exchange the energy by the wheel and reusing the weight of the material to generate continuous kinetic energy**

The process of exchange the energy by the wheel and reusing the same weight of the material by turning the potential energy to Kinetic energy - without loss of energy during the exchange of energies-depending on the injection of pressured oil through the wheel - as explained in details- by several pistons and valves which working through the process to keep the wheel rotate continuously.

3. **Dynamic process through mutual pressure between the pistons included in the device.**

The mutual pressure between the pistons by the valves in this sequence, especially these valves depend on their positions in a harmonic process to save energy as explained in detail.

4. **The valve depends on the position and the controlled amount of oil.**

This valve allows a definite amount of oil to pass through it at a certain position and specified time during the cycle of the wheel, as explained in detail.

**Amended claims in accordance with Rule 137(2) EPC.**

1. **Claim.** A generating electric power invention device, comprising:

   a generating kinetic energy wheel device called part A;
   a main holder (H);
   two roller groups (17-a) & (17-b);
   a roller barrier (45), coupled with the main holder (H);
   a gearbox (60);
   a belt (50), connecting between part A and the gearbox;
   a generator (70); and
   a belt (51), connecting between the gearbox and the generator.

2. Claim. Part A, comprising:

   a chassis (9);
   part E, coupled with chassis (9); and
   group D, coupled with part E and chassis (9).

3. **Claim.** Group D as in claim 2, comprising:

   at least similar four groups K;
   the groups called K1, (K2), (K3) &(K4); and
   the groups K successive regularly around E;
   group K1 will be studied as an example for K.

4. Claim. Group K1 as in claim 3 or 2, comprising:

   a group B, hinged with part E; and
   a group C; and

a group F.

5. Claim. Group B as each group K as in claim 4 or 2, comprising:

    a lever (5); and
    a group of weight (4), fixed with the end of the lever (5).

6. Claim. Group C in the same group K1 as in claim 4 or 2, comprising:

    a group of pistons (p);
    a group of valves (v); and
    a group of flexible pipes (f), connected with the pistons of the same group K1.

7. **Claim.** Group of pistons (p) in the same group $K_1$ as in claim 6 or 2, comprising:

    a piston (2-1), coupled with chassis (9);
    a piston (2-2), coupled with part E;
    a piston (2-3), coupled with part E;
    a piston (2-4), coupled with piston (2-1);
    a piston (2-5), coupled with group of weight (4);
    a piston (2-6-1); and
    a piston (2-6-2), coupled with piston (2-6-1).

8. Claim. Each piston (p) in the same group K as in claim 6 or 7 or 2, comprising:

    a cylinder body (2);
    a crown (11);
    a column (12);
    a plug (13), closing the back of the cylinder's body; and
    a body's holder (22), coupled with the body's cylinder.

9. Claim. Weight group (4) of the group K as in claim 5 or 2, comprising:

    a cylinder (4-1), holly and closed, fixed with the upper of lever (5);
    a weight column (4-2), hinged with the holly cylinder (4-1);
    a hard pipe (4-3), fixed around the cylinder (4-1);
    a weight (4-4), is a mass with high density fixed with the lower end of column (4-2);
    at least four levers (4-5), hinged with columns (12-5);
    a bolt (4-6), fixed between the holly cylinder (4-1) and the lever (5);
    at least four pistons (2-5), inside the cylinder (4-1), fixed with the pipe (4-3);
    an input nozzle (39), rotatable, coupled with pipe (3-5);
    an output nozzle (40); fixed with pipe (4-3);
    at least four box bases (4-7), fixed with the pipe (4-3); and fixed with the cylinder bases (4-1) near of each piston (2-5); and
    a pressure part (4-8), fixed with the back of the weight column (4-2), variable height from the center of cylinder (4-1), figure-10.

10. Claim. The chassis (9) as in claim 2, comprising:

    a wheel (27);
    a bearing roller (31);
    a cylinder (29) surrounds the bearing roller (31);
    support columns (28), coupled between the wheel (27) and the cylinder (29); and
    an axial bar (10), fixed with the main holder (H); passing through the bearing roller (31); and fixed with a rigid bar (30).

11. Claim. Each piston (p) in the same group K as in Claim 6 or 7 or 2, comprising:

a compression chamber (20), extended with the body (2);
a base (38) of the compression chamber (20), on front of the crown;
a fluid's input nozzle (39), on the body (2), on front of the crown (11); and
a fluid's output nozzle (40), on the base (38).

**12.** Claim. Group (f) of the flexible pipes, in the same group K1 as in claim 6 or 2, comprising:

five flexible pipes (3), said {(3-1), (3-2) and (3-3)} ;
the pipe (3-1), connecting between the piston (2-1) and (2-2);
the pipe (3-2), connecting between the piston (2-2) and (2-3);
the pipe (3-3), connecting between the piston (2-3) and (2-1).
the pipe (3-4), connecting between the piston (2-3) and pipe (4-3); and
the pipe (3-5), connecting between the piston (2-6-1) and cylinder (4-1).

**13.** Claim. Group of valves (v) in the same group K1 as in claim 6 or 2, comprising:

an input valve (6) type, fixed on the entrance of the pistons; and
a position valve (7) type, fixed on the piston's nozzle.

**14.** Claim. Group of input valves (6) in the same group K1 as in claim 13 or 6 or 2, comprising:

an input valve (6-1), for the piston (2-2), between pistons (2-1) & (2-2); and
an input valve (6-2), for the piston (2-3), between pistons (2-2) & (2-3);
an input valve (6-3), for the piston (2-1), between pistons (2-3) & (2-1);
an input valve (6-4), between the pistons (2-1) & (2-4); and
an input valve (6-5), for the piston (2-4), on the input nozzle (39) for external pump pressure;
an input valve (6-6), for the piston (2-5);
an input valve (6-7), for the pipe (4-3), between pistons (2-5) & pipe (4-3); and
an input valve (6-8), for the piston (2-6-2), on the input nozzle (39), between pipe (4-3) & piston (2-6-2); and
an input valve (6-9), for the piston (2-6-2), on the input nozzle (39) for external pump pressure.

**15.** Claim. Group of position valves (7), in the same group K1 as in claim 13 or 6 or 2, Comprising;

a valve (7-1), fixed on the input of the piston (2-2);
a valve (7-2), fixed on the exit of the piston (2-2);
a valve (7-3), fixed between the pistons (2-1) & (2-4).
a valve (7-4), fixed between the pistons (2-6-1) & (2-6-2); and
a valve (7-5), fixed between the pistons (2-6-1) & cylinder (4-1), on nozzle (40) of (2-6-1).

**16.** Claim. Part E as in claim 2, comprising:

a wheel (1), hanging on the four rollers (17-1) of pistons (2-1) of groups ($K_1$, K2, K3&K4);
a toothed piece (19), around the wheel (1) from outside;
at least eight stoppers (33), regularly successive around the wheel (1) from inside;
a ring (23), coupled and parallel the wheel (1); and
at least four straight lengths (16), between the stopper (33).

**17.** Claim. The position valve (7), comprising:

a hollow cylinder (41), fixed perpendicular to the nozzle;
a solid cylinder (42), inside the hollow cylinder;
a short column (43), fixed with the end of the solid cylinder; and
a weight (44), fixed with the end of the short column (43).

**18. Claim.** Support columns (28) as in claim 10 or2, wherein:

support columns (28) are light;
support columns (28) are thin;

the columns are distributed regularly around the wheel (27);
first end of the column (28) fixed on the cylinder (29); and
sconed end of the column (28) fixed inside the wheel (27).

**19.** Claim. The hollow cylinder (41) as in any of claims 17, 15, 13, 6 or 2, wherein:

the cylinder (41) is the body of the position valve (7);
the cylinder of valve (7) is horizontal, at any time during part E rotation; and
the hollow cylinder (41) is perforated.

**20.** Claim. The solid cylinder (42) as in any of claims 17, 15, 13, 6 or 2, wherein:

the solid cylinder (42) is perforated;
the solid cylinder (42) diameter equals the inner diameter of the hollow cylinder (41); and
the solid cylinder (42) able to rotate in the hollow cylinder (41).

**21. Claim.** The short column (43) as in any of claims 20,19 17, 15, 13, 6 or 2, wherein:
the short column (43) prevents the solid cylinder (42) from rotation with the hollow cylinder (43), by the weight (44).

**22. Claim.** The weight (44) as in any of claims 21,20,19,17, 15, 13, 6 or 2, wherein:

the weight (44) fixed the solid cylinder (42) direction; and
the hole of the solid cylinder has a constant direction.

**23. Claim.** The position valve (7) as in any of claims 21,20,19,17, 15, 13, 6 or 2, wherein:

each of the holes of the two cylinders (41) & (42) is perpendicular on the cylinder's longitudinal axis, with the flow direction; and
both holes of the two cylinders on the same line, whenever opening case;
whenever they meeting, allowing flow to pass through the two holes;
the two holes meet each other twice per every cycle of the rotation of part E; and
the two holes were adapted to meet each other at a certain position, related each valve function.

**24.** Claim. The position valve (7) as in any of claims 23, 22 ,21 ,20,19,17, 15, 13, 6 or 2, wherein:

the position valve (7), opens for the flow at definite position; and
the position valve (7), controls the time and the position for flow passing.

**25. Claim.** Group (F) in the same group K1 as in claim 4 or 2, comprising:

a group (J), connecting between parts E & B;
a group of springs (14) (s);
a group of springs (18) (t);
a group of rods (r); and
a group of rollers (17) (n).

**26. Claim.** Group (J) as in claim 25 or 4 or 2, comprising:

a group (J1) type coupled between part E and the lever (5); and
a group (J2) type coupled between part E and the lever (5).

**27.** Claim. Group (J) as in claim 26 or 24 or 4 or 2, comprising:

(J1), comprising two mirrored groups (i); and
(J2), comprising two mirrored groups (i).

**28. Claim.** Group (s) as in claim 25 or 4 or 2, comprising:

a spring (14-1), coupled between the rod (22) & the piston (2-2); and
a spring (14-2), coupled between the rod (22) & the piston (2-3).

**29. Claim.** Group (t) as in claim 25 or 4 or 2, comprising:

two spring (18-1), coupled with part E & the piston (2-1);
a spring (18-3), coupled with the tail of lever (5) & the piston (2-3);
a spring (18-6-1), coupled with the piston (2-6-1) and the column (12-6-1);
a spring (18-5), coupled with of lever (4-5);
a spring (18-2), tightens between the crown (11) and the base (38) of the piston (2-2);
a spring (18-37), coupled between the barrier (37) and the roller ring (47) of the roller barrier (4-5); and
a spring (18-45), coupled between a foldable tooth of ring (47) and the ring (47) of the roller barrier (45).

**30. Claim.** Group (r) as in claim 25 or 4 or 2, comprising:

a hinged rod (15) is hinged with the lever (5);
an angle rod (22) fixed with part E; and
rod (35), fixed with wheel (1) and the ring (23);
an angle rod (36), fixed with wheel (27), hold piston (2-1);
an angle rod (25) fixed with part E.

**31. Claim.** Group (n) as in claim 25 or 9or 4 or 2, comprising:

a roller (17-1), coupled with the end of column (12) of piston (2-1);
a roller (17-2), surrounded by the slotted end of the column (12) of the piston (2-2);
a roller (17-3), coupled with the end of column (12) of piston (2-3).
a roller (17-4), coupled with the end of column (12-5) and with the lever (4-5); and
a roller (17-5), coupled with the end of lever (4-5) of the weight group (4).

**32. Claim.** Part B as in claim 5 or 4 or 2, wherein:

part B is hinged with the wheel (1) at three points by three hinge parts;
the first point at the tail of the lever (5) with the piston's column (2-3);
the sconed point near the tail of the lever (5) with the group (J1); and
the third point near of the weight group (4) with the group (J2).

**33. Claim.** The wheel (1) as in claim 16 or 3 or 2, comprising:

a vertically circular frame; and
a horizontal circular frame, fixed around the vertical frame from outside.

**34. Claim.** The wheel (1) as in any of claims 33, 16, 3, or 2, wherein:

the wheel (1), comprising at least five longitudinal holes.
the wheel (1), light; and
the wheel's (1) radius equal r.

**35. Claim.** The roller (17) as in claim 31 or 25 or 2, wherein:

the roller (17), surrounded between column's end;
the roller's (17), grooved edge; and
the roller (17), smooth metal.

**36. Claim.** the straight lengths (16) as in claim 16 or 3 or 2, wherein:

the four straight lengths (16), fixed vertically with the vertical edge regularly successive; and
the lengths (16), ended with the stoppers (33) from the left and the right.

37. **Claim.** Group (t) as in claim 29 or 25 or 4 or 2, wherein:

the springs (18), are tensile spring; and
the springs (18), could restore their position after tensile force.

38. **Claim.** The flexible pipes group (f) as in claim 12 or 6 or 2, wherein:

the flexible pipes (3) are not stretchable; and
the pipes could transfer the fluid pressure between a pistons loop.

39. Claim. The input valve (6) as in claim 13 or 14 or 6 or 4 or 3 or 2, wherein:

the input valve (6) comprising a movable gate;
the gate able to open for one side only; and
the valve (6) allows flow passing in one direction only.

40. **Claim.** The input valve (6-4) as in claim 39 or 13 or 14 or 2 wherein:

the input valve (6-4) inside the hole of the solid cylinder of the position valve (7-3);
the input valve (6-4) inside the position valve (7-3), has a constant direction during rotation; and
the valve (6-4) has a constant direction to up, during all of the cycle; and
the input valve (6-4) exchanges fluid's direction in and out, between the two pistons (2-1) & (2-4) successively.

41. **Claim.** The cylinder (4-1) as in the claim 9 or 5, wherein:

half filled by fluid;
has two bases;

the first base fixed with the levers (5);
the cylinders circle bases are vertical and parallel with the wheel (1); and
the sconed base center, coupled with the weight columns (4-2), through the bearing rollers (31-4); and
the sconed base, coupled with the rotatable input nozzle (39); the rotatable input nozzle (39) near of the center of the base; coupled with the column (4-2), hinged outside the cylinder (4-1); the cylinder (4-1), comprising:
the pipe (4-3);
at least four groups, each group comprising:

the box base (4-7), holly; coupled with the spring (18-5)
the spring (18-5), hinged with the upper of the lever (4-5);
the roller (17-4), coupled with the piston column (2-5);
the roller (17-5), coupled with the upper end of the lever (4-5);
the piston (2-5); and
the lever (4-5), the lower end hinged with the base (4-7); and
the pressure part (4-8), in side cylinder, fixed with the column (4-2).

42. Claim. The ring (23) as in any claim 16, wherein:

fixed parallel with the wheel (1) by the bars (35);
supports the bars (35); and
fixed the pistons (2-6), with the bars (35).

43. Claim. The wheel (27) as in claim 34 or 33 or 2, wherein:

the wheel (27) is vertically and circular frame; and
the wheel (27) is light;
the wheel (27) is parallel to the wheel (1); and
the center of the wheel (1) and the wheel (27) on the same horizontal axis.

**44.** Claim. The wheel (27) as in claim 2 or 34 or 40, wherein:

> the wheel (27), carried by the columns (28);
> the wheel (27), surrounded by the belt (50); and
> the wheel (27) rotatable around the axial bar (10).

**45. Claim.** The lever (5) as in claim 32 or5, comprising:

> a horizontal edge, applies to the wheel (1); and
> a vertical edge, fixed above the horizontal edge;
> the vertical edge is inverted outside; and
> gradually increasing from the tail to the group (4); and
> fixed with the weight group (4), far from it by small distant; the vertical part has two protrusions at the tail;
> penetrating the wheel (1);
> the two protrusions surround the roller (17-3); and
> the first protrusion comprising foldable tooths.

**46. Claim.** The lever (5) as in claim 45 or 32 or 5 or 2, wherein:

> the lever, rested on the wheel (1), before acting; and
> the lever, part of the circle form, matches the wheel (1);
> the two protrusions control the movement of the roller (17-3);
> the two protrusions control the lever longitudinal movement; and
> the foldable tooths of the first protrusion help fixing the tail during pressure up, in case it is in left side only.

**47. Claim.** The pipe (4-3) as in claim 41 or 9 or 5, wherein:

> closed circle pipe, hard, fixed between the two edges of the cylinder's bases;
> coupled with the output nozzle (40);
> coupled with the output nozzle of the piston (2-5);
> comprising a compressible spring (21-3), surrounded between two crowns inside the pipe (4-3);
>
>> the spring presses the crowns, pushing the fluid; and
>> the crowns press the fluid through valve (6-8), to piston (2-6-2); and
>
> covered with a solid grove;
> at the area of touching with the piston column (12-2); and the grove is part of a circle.

**48.** Claim. The hinged rod (15) as in claim 30 or 25, wherein:

> the first end of the rod (15) is hinged under the lever (5) with the horizontal edge of the lever (5); and
> the sconed end of the rod (15) movable on the toothed piece.

**49.** Claim. Groups (i) as in claim 27 or 26 or 25 or 2, comprising:

> a column (24) coupled between the lever (5) and the wheel (1), comprising two ends;
> two thin discs (34) coupled with the columns (24);
> a spring (21) surround the columns (24); and
> an angles bar (25).

**50.** Claim. The first disc (34) as in claim 49 or 27, wherein:

> fixed after distant X from the first end of column (24), under the wheel (1);
> touching with the spring (21); and
> transfers any force from the column (24) to spring (21) or from spring (21) to column (24).

**51.** Claim. The sconed disc (34) as in claim 49 or 27, wherein:

the sconed disc (34) fixed with the sconed end of the column (24);
the sconed disc (34) under the angle bar's hole (25); and
the sconed disc (34) prevents the sconed end of the column (24) from leaving the bar (25).

**52. Claim.** The angles bar (25) as in claim 48 or 30 or 25, wherein:

each angles bar (25) comprising a hole;
bar (25) allows column (24) to pass through its hole;
bar (25) prevents sconed disc (34) from passing through its hole;
bar's hole (25) controls column's (24) way, and
bar's hole (25) limits vertical and lateral movements of column (24).

**53. Claim.** The column (24) as in claim 49 or 27, wherein;

the first end hinged with the lever (5); and
the sconed end fixed with the sconed disc (34).

**54. Claim.** The column (24) as in claim 53 or 50 or 49 or 32 or 30 or 27 or 26 or 25, wherein;

passing through the longitudinal hole of the wheel (1);
passing through the spring (21);
passing through the angle bar hole (25); and
the two mirrored columns enclosed the lever (5) at the same point of the lever (5) longitudinal section.

**55. Claim.** The spring group (21) as in claim 49 or 27 or 26 or 2, wherein:

the spring (21), compressed between the disc (34) and the angle bar (25);
the spring (21-3), compressed between two crowns in the pipe (4-3);
the spring (21-4), compressed between the crown and the plug (13-4);
the spring (21-6-2), compressed between the crown (11-6-2) and the plug (13-6-2); and
compressional springs;
could restore their position after compression force; and
could restore them position after compression force.

**56. Claim.** The bearing roller group (31) as in claim 9, wherein:

smooth balls;
surrounded between a cylinder and an axial bar; and
decreasing the friction with the bar (10); and
the bearing roller group (31) comprising:

a bearing roller (31), coupled with the bar (10);
a bearing roller (31-4), coupled with the cylinder (4-1); and
a bearing roller (31-17), coupled with the roller (17).

**57.** Claim. Group J1 as in any of claims 55, 54, 53, 52, 51, 50, 49 or 32 or 26 or 25 or 2, wherein:

(J1) acting as a confusion point between the weight (4) and the piston (2-3) during rotation down;
(J1) pushes the lever (5) away from the wheel (1), by the spring (21);
(J1) limits the distant may lever (5) far away from the wheel (1), by the sconed disc (34); and
(J1) controls the lateral movement of the lever (5), by the columns (24).

**58.** Claim. The roller column (26), as in claim 64,62, comprising:

two columns with different diameter, sliding inside each other;
upper column, coupled with the roller (17-a) & (17-b); the upper column divided into two parts from the upper end;
an axial bar, fixed with the two parts of the upper column, through the bearing (31-17);
lower column, fixed with constant place;

two discs (49), each one fixed perpendicular with the upper and the lower columns;
a spring (48), surrounded between two discs; and the spring easily transfers the rotation to the roller; and
a weir (32), tight to the upper and the lower columns discs, keeping the spring (48) compressed.

**59.** Claim. Group (J2) as in claim 49 or 32 or 27 or 25 or 2, wherein:

(J2) controls the lateral movement of the weight group (4), by the columns (24); and
(J2) helps to push part B away from the wheel (1), by the spring (21).

**60.** Claim. The lever (5) as in claim 46 or 45or 5 or 2, wherein:

the lever (5) of part B could give the weight (4) additional torque arm, during rotation;
as group (J1) is a confusion point, the lever (5) transforms
the force of the weight group (4) into a pressure on the piston (2-3) of successor group; and
part B generates a pressure on the successor piston (2-3) of the group K.

**61.** Claim. The toothed piece (19) as in claim 16 or 2, wherein:

the toothed (19) is many rows of short tooths;
supports the rod (15), on the wheel (1); and
could prevent the free end of the rod (15) from sliding down.

**62.** Claim. The roller group (17-a) as in claim 58 or 1, wherein:

fixed around the lower point of cycle ($\pm$ 5 degrees);
fixed parallel and far from the wheel (1);
wherever, touches with the lever (5), when W is before the lower point (about 10 to 15 degrees); and
the roller group (17-a) comprising:

a spring (48), consider not compressible;
first roller column (26); and
the roller (17-a), smooth, easy rotating.

**63.** Claim. The hinged rod (15) as in claim 48 or30 or 25, wherein:

wide bar thin and rigid, comprising a free tapered end;
supports the lever (5), after pushing up by the piston (2-2); and
prevents the lever (5) from falling down, whenever the piston's column (2-2) restoring its position.

**64.** Claim. The roller group (17-b) as in claim 58 or 1, wherein:

fixed after the lower point of cycle about (75-55) degrees during rotation up;
fixed parallel and far from the wheel (1);
wherever, touches with the vertical part of lever (5), when the lever (5) leaving the roller (17-a); and
the roller group (17-b) comprising:

a spring (48), little compressible by the force of lever (5); sconed roller column (26); and
the roller (17-b), smooth, easy rotating.

**65.** Claim. The roller column (26), as in claim 64,62, wherein:

the first column (26) holds the roller (17-a);
the sconed column (26) holds the roller (17-b);
allows only the movement perpendicular on lever (5);
helps rollers to push the lever (5); and
acts as a reaction on the lever (5).

**66.** Claim. The stopper (33) as in claim 16 or 2, wherein:

a small piece constant prier; and
prevents the roller (17-1) from continuing to sliding out of the straight length (16).

**67.** Claim. The straight length (16) as in claim 16 or 2, wherein:

a straight metal piece;
a thin piece;
not curved on the curved wheel edge (1); and
could help the roller (17-1) to slide easily.

**68.** Claim. The rigid bar (30) as in claim 10, wherein:

fixed with the axial bar (10), vertically to down;
not capable to move; and
holds a roller barrier (45).

**69. Claim.** The roller barrier (45) as in claim 68, comprising:

two half rings (46 ,47) nested and faced each other, comprising:

the constant toothed ring (46); and
the foldable toothed ring (47);

at least six barriers (37).
the roller barrier (45), fixed horizontally with the bar (30), down of the axial bar (10), by distant (0.35 to 0.45) of wheel (1) radius.

**70.** Claim. The pistons (2-1) of K as in any of claims 11,10, 9, 8,6,7, or 2, wherein:

mounted on the chassis (9) with the wheel (27), by the angle rods (36);
regularly distributed around the wheel (1), from inside;
their columns (12) are perpendicular on the vertical frame of the wheel (1);
the slotted end of its column (12) surrounds the roller (17-1);
the roller (17) touches the straight length (16) of the part E; and delayed of the center of the weight group (4) by 5° degrees,
with the rotation direction.

**71. Claim.** The weight column (4-2) as in claim 41 or 9, wherein:

light, vertical and ended with a horizontal axis; and
the horizontal axis fixed between the upper end of the column and the part (4-8), through the bearing roller (31-4);
fixed down direction, by the weight (4-4);
gives the part (4-8) its direction, during rotation; and
carries the weight (4-4).

**72. Claim.** The constant toothed ring (46) as in claim 69 or 1, comprising:

an inner vertical edge, fixed with the bar (30);
a lower horizontal edge of roller (4-5);
carries the foldable toothed ring (47); and
constant and fixed tooths;
the constant tooths stop the nested foldable tooths of ring (47).

**73. Claim.** The foldable toothed ring (47) as in any of claims 72,69 or 1, comprising;

movable half ring, around the bar (30); comprising:

a horizontal upper edge;

an outer vertical edge; and

a foldable tooths, nested diagonally with the constant tooths of the ring (46);

the foldable tooths coupled with springs (18-47);
the foldable tooths folds over the constant tooths, when rotating with the roller (45) rotation; and
the constant tooths stop the nested foldable tooths, when trying to rotate against the roller (45) rotation.

**74. Claim.** Part E as in claim 16 or 2, wherein:

part E loaded with four parts B loads; and
part E loads on the rollers (17-1) of pistons (2-1) of K.
part E transfers its total loads and own weight to the upper vertical column (12-1) of pistons (2-1);
generating a pressure in the upper vertical piston (2-1);
part E presses the upper vertical column (12-1) down; and
could push the column for limited distant X.

**75.** Claim. The spring (18-1) as in claim 29 or 25or 2 wherein:

the spring (18-1) is tightened by a diagonal 45° degrees;
the spring (18-1) tightens the end of column (12) to the stoppers (33) from right and left;
the spring (18-1) pulls the lower columns of piston (2-1);
pulls the fluid to piston (2-1), when they are at lower point;
controls the column's movement of the piston (2-1) related to the wheel (1); and
restores the column's position related to the wheel (1).

**76.** Claim. The barrier (37) as in claim 73 or 69 or 68, wherein:

hinged with the outer edge of the ring (47), from outside;
coupled with the ring (47) in two points;
first point (with rotation) is free touched; and sconed point is hinged,
foldable for only one side, foldable toward rotation direction;
part of hard ball;

each circular face of the barrier faced the piston's (2-6-1) column, during rotation; and
each barrier comprising a spring (18-37); the spring coupled with the ring (47); and restores the position of
the barrier after fold force; and

the barrier stops the column (2-6-1) movement to back; then, the column pushes the piston to ahead (with
rotation).

**77.** Claim. The spring (48) as in claim 65 or 64 or 1, wherein:

strong spring, coupled with the columns (26);
the same properties of spring (21), more power;
surrounded between the two discs (49);
compressed with the weir (32); and
pushes the roller (17-b), after compressing;
maximum compressing distant 0.2X.

**78.** Claim. Group (s) as in claim 28 or 25 or 2, wherein:

the spring (14) could restore its position after rotation force; and
the spring gives the piston flexibility to rotate with a
rotational force.

**79.** Claim. The lever (4-5) as in claim 71 or 41 or 9 or 2, wherein:

very stiffness rod;
the upper end could touch the lower edge of the pressure part;
sliding by the roller (17-5) on the lower edge of the part (4-8);
hinged with the springs (18-5), from the upper part; and
the spring pulls the lever (4-5), touching the part (4-8);
hinged with the piston's columns (2-5), near of the lower end of the lever (4-5);
surrounded between the part (4-8) and the column (12-5); and
increases the reaction on the column (12-5), increasing pressure.

**80.** Claim. The roller barrier (45) as in claim 69 or 76 or1, wherein:

during rotation, when piston (2-6) touching a first barrier (37); the roller barrier (45) rotates with the piston;
when the successor barrier touches the piston, the piston body stopped the successor barrier;
the piston folds the first barrier, by lateral body pressing; and
after column (12-6-1) passing on front of the successor barrier,

the column and the barrier touch each other, by the spring of foldable barrier figure-13;
giving the piston's column (12-6-1) the required constant barrier, to push it at a suitable position.

**81.** Claim. The piston (2-4) as in any of claims 11,9, 8,7, or 2, comprising:

a spring (21-4) is surrounded between the crown (11-4) and the plug (13-4); and
an input nozzle (39) of piston (2-4), with the valve (6-5);

**82. Claim.** The piston (2-4) as in any of claims 81,11,10,9,8, 7 or 2, wherein:

the piston (2-4) on the other side of the piston (2-1) with the same body area;
the piston's (2-4) column direction is toward the axis of the wheel (1);
the piston's (2-4) column limited movement; and
an external pump presses the fluid with input valve (6-5), pressing the spring (21-4).

**83. Claim.** The spring (21-4) as in claim 81 or 11or 2, wherein:

the spring (21-4) is compressible; and
the spring (21-4) pushes the fluid toward the piston (2-1).

**84. Claim.** The piston (2-4) as in any of claims 82, 74, 70, ,11,8,7 or 2, wherein:

the pressure of piston (2-4) more than the maximum pressure of piston (2-1), controlled by the pump;
the pressure of the piston (2-4) balances the decrease of the pressure of the piston (2-1);
pushing fluid toward the piston (2-1), at the upper half cycle; and
helps to increase the velocity of the flow toward piston (2-2).

**85.** Claim. The piston (2-3) as in any of claims 60,29,31,11, 8,7 or 2, wherein:

the piston's (2-3) column is perpendicular to the horizontal edge of the wheel (1), from inside; perpendicular to the tail of the lever (5);
the area of its crown equals twice of the area of the piston (2-2); and
the piston's roller (17-3) and the spring (18-3) coupled with the lever's (5) tail through the holes of the wheel (1).

**86. Claim.** The piston (2-6-2) as in any of claims 80,76,11, 8,7, or 2, wherein:

fixed with the rods (35) and the ring (23);
coupled with the position valve (7-4);
the position valve (7-4) separates between the two pistons (2-6-1) and (2-6-2);
coupled with the pipe (3-4), through the nozzle (39); input valve (6-8) on the nozzle (39);
pressured with the spring (21-6-2), by external pump through input valve (6-9) on a sconed nozzle (39);
the maximum pressure (by pump) P6 not less than $1.5W/A_{(6-2)}$.

15

**87. Claim.** The spring (18-3) of the group K1 as any group K as in claim 85 or 29 or 25or 2, wherein:

tightens the end of column (12) of the piston (2-3) to the tail of the lever (5) of the successor group(K4);
could restore its position after a tensile force; and
could restore the column of the piston (2-3) to its position, after sliding under the pressure of a lever.

**88. Claim.** The pressure of piston (2-1) of K1 as in any of claims 74, 11 or 2, wherein:

whenever, the weight group (4) of K1 around the upper point of the cycle;
the column (12-1) of the piston (2-1) of K1 loaded by the maximum vertical pressure from part E; and
the pressure of part E pushes column (12-1) of the piston (2-1) of K1; and
the crown (11-1) could press the fluid toward the position valve (7-1) and the piston (2-2) of K1.

**89. Claim.** The input valve (6-4) of K1 as in any of claims 70, 39,14, 6 or 2 wherein:

whenever any of the pistons (2-1) is around the upper point of the wheel (1); and
the input valve (6-4) prevents the fluid from going toward piston (2-4).
whenever piston (2-1) is around the lower point of the wheel (1),
the input valve (6-4) allows the fluid going toward piston (2-4); and
the valves (6) allow the fluid passing between pistons through following direction loop;
from (2-4) to (2-1) to (2-2) to (2-3) to (2-1) to (2-4) again.

**90. Claim.** The pressure part (4-8) as in any of claims 79, ,71,47, 41 or 9, wherein:

the column (4-2) and its pressure part (4-8), have constant
direction during rotation;
the lower edge as a part of circle;
the lower edge has small height at the first point, increases at the last point, from the center of cylinder (4-1);
the piston (2-5) and the lever (4-5) rotate with the cylinder, exchanging their position related the pressure part (4-8);
when the upper end of the lever (4-5) passing under the first point of the part (4-8), start pressure on the column (12-5); and
during rotation, the lever (4-5) passing under the last point of the part (4-8), the maximum pressure on the column (12-5).

**91. Claim.** The piston (2-6-1) of K1 as in any claim 86,80,76, 11, 8,7 or 2, wherein:

faced with the piston (2-6-2), base to base;
its column (12-6-1) perpendicular on the ball of barrier (37),
during rotation, figure (13); the column direction opposite of the rotation direction;
parallel to the ring (23); and
the piston column (12-6-1) is telescopic system;
pushes the column (12-6-1), whenever, the valve (7-4) opens;

the column pushes the barrier (37);
effecting on the wheel (1) at least for five degrees; and
after the valve (7-4) closing, the valve (7-5) opens;
the spring (18-6-1) pushing the fluid toward the pipe (3-5), through nozzle (40) of the piston (2-6-1); and

**92. Claim.** The position valve (7-1) of K1 as in any of claims 88,24,23, 19, 17,15 or 2, wherein:

at define position, when the weight (4) of K1 around the upper point; and
the valve (7-1) opens to pass the flow, toward the piston's (2-2) input (39); and
closing directly after pushing the weight (4), during rotation.

**93. Claim.** The piston (2-2) of K1 as in any of the claims 31,29, 11or 7 or 2, comprising:

the tensile Spring (18-2) tightens between the crown (11) and the base (38) of the piston (2-2); and

the roller (17-2) is surrounded by the slotted end of the
column (12-2), touching with the grove of cylinder (4-1).

**94.** Claim. The piston (2-2) of K1 as in claim 93 or 92 or 89 or 88 or 87 or 70 or 2, wherein:

after the valve (7-1) of K1 opening for fluid to pass;
the fluid from piston (2-1) pushes the crown (11) of column (12-1) of the piston (2-2);
column (12-1) pushes the weight (4) up for a distant 5X;
the weight (4) of K1 gains an additional torque arm; and
the weight (4) of K1 gains an additional potential energy.

**95. Claim.** The rod (15) of K1 as in claim 94 or 93 or 92 64 or 63 or 48 or 2, wherein:

after the weight (4) is pushed up, the free end of the hinged rod (15) rotating up to touch the toothed (19);
the rod (15) keeps the weight (4) with the lever (5) away from the wheel (1) for distant 5X; and
preventing the weight (4) from falling on the wheel (1).

**96. Claim.** The spring (18-2) of K1 as in claim 95 or 94 or 93 92or 29 or 8 or 7 or 2 wherein:

after the piston (2-2) pushed the weight group (4) up;
pulls the crown (11-2) to the base (38), restoring its position;
and
pushes the fluid toward the output nozzle (40) of piston (2-2).

**97. Claim.** The position valve (7-2) of the group K1 as in claim 92 or 24 or 23 or 19 or 17 or15 or 14 or 6 or 2, wherein:

the valve (7-2) could open, after position valve (7-1) has been completely closed; and
the valve (7-2) allows the fluid to pass through the output nozzle (40), toward the nozzle (39) of the piston (2-3).

**98. Claim.** the piston (2-5) as in any of claims 90,79 or 71,41, 9, wherein:

fixed regularly inside the cylinder (4-1);
its base fixed on the pipe (4-3), with the valve (6-7);
its column (12-5) hinged under the lever (4-5);
comprising a nozzle (39) with the input valve (6-6); and
the nozzle (39), allows fluid of cylinder (4-2), passing to the piston (2-5).

**99. Claim.** The piston (2-3) as in any of claims 97,96,85 12, 11, or 2 wherein:

after the valve (7-2) allows the fluid to pass,
the fluid passing into the piston (2-3) through pipe (3-2), pushing the crown (11-3) of the piston (2-3);
the column (12-3) moves up for distant Z;
pushing the lever (5) of successor group (K4); and
where distant Z is more than 2X, not more than 3X.

**100.Claim.** The piston (2-5) as in any of claims 98,90,91, 71, 47,41,9, wherein

during rotation, the cylinder (4-1) rotating with the lever (4-5); the lever (4-5) passing under the lower edge of the part (4-8); the part (4-8) pressing on the upper end of the lever (4-5) gradually;

the lever (4-5) pressing on the column (12-5);
the column (2-5) pressing on the crown (11-5); and the fluid inside the piston (2-5);

the piston presses the fluid inside the pipe (4-3);
after the roller (17-5) of the lever (4-5) leaving the lower point of the part (4-8), the spring (18-5) pulls the lever (4-5), and pulling the column (12-5) up;
pulls the fluid from the cylinder (4-1), through the input valve (6-6); the four pistons repeat the steps (pressing and pulling) once every cycle, to reinject the fluid of piston (2-6-1); and

the summation of the volume of the pistons (2-5) equals the volume of piston (2-6-1), they should not be equal.

**101.Claim.** The weight (4) of the group K1 as in claim 95 or 94 88 or 72 or 60 or 57 or 47 or 5 or 2, wherein:

after the weight (4) has been pushed up;
the weight (4) with the additional potential energy affecting of the wheel (1);
the weight (4) of K1 pushes the lever (5) of K1 away from the wheel (1), by gravity;
the weight (4) gradually far away for a distant Y, from the wheel (1); and
the weight (4) increases its torque arm from 5X to Y, during rotating down at the half right cycle, by gravity.

**102.Claim.** The hinged rod (15) as in claim 101 or 95 or 64 or 63 or 2, wherein:

during rotation down the hinged rod (15) after increasing the torque arm becomes free; and
the free end of the rod (15) rotates down meeting the lever (5).

**103.Claim,** Group (J1) of the group K1 as in any of claims 99,85,60,58, 31, 26, 25 or 2, wherein:

(J1) as confusion point divides the lever (5) into a long arm and a short arm;
the weight (4) of K1 with the long arm balances on (J1) as confusion point; and
on the other side of (J1), the short arm of the lever (5) of group K1.

**104.Claim.** The weight group (4) of K1 as in any of claims 103,101,99, 85,72,71,60,57 or 47 or 2, wherein:

during rotation down after the weight (4) of K1 passes the 45 degrees of the upper point of the cycle;
as part B hanged from the group (J1); and
W1 with the long-divided arm of the lever (5), presses gradually on the roller (17-3) of the piston (2-3) of group (K$_2$).

**105.Claim.** The spring (18-3) as in any of claims 10487, or 2, wherein:
the spring (18-3) pulls the column of the piston (2-3) to restore its position.

**106.Claim.** The piston (2-3) of the group (K$_2$) as in any of claims 105,104,103,101 ,99,60,57 or 2, wherein:

during rotation down at the half right cycle;
part B acts as a crane pressing on the piston's column (2-3), by the tail of the lever;
column (12-3) of piston (2-3) of (K$_2$) presses the fluid

toward output nozzle (40) of the piston (2-3); and
toward the input valve (6-3) of piston (2-1), through flexible pipe (3-3).

**107.Claim.** The piston (2-3) of the group (K2) as in any of claims 106,105,104,103,101 ,99,11 or 2, wherein:

the piston (2-3) reinjects the fluid in piston (2-1) by the tail of the lever (5) of the successor group K; and
the piston (2-3) reinjects the fluid to piston (2-1) of (K2).

**108.**Claim. The piston (2-1) of group (K$_2$) as in any of claims 107, 89, 11 or 2, wherein:

at the lower half of the cycle, the wheel (1) pulls down the piston's column (12-1), by the two springs (18-1);
the piston (2-1) of group (K$_2$) receives the fluid from piston (2-3) of the group (K$_2$); and
the piston (2-1) keeps its amount of fluid only.

**109.**Claim. The piston (2-6) of group (K$_2$) as in any of claims 108,100,91,86,80,47,41 or 2, wherein:

when, W1 around the lower point of cycle (depending on the distant Y), starting to decrease the villosity of the wheel (1), figure (12);
the position valve (7-4) of the piston (2-6) of k1 opens,

allowing the fluid passing to the column (12-6-1);

pushing the barrier (37), generating reaction R3 on the piston (2-6); and
effecting on the wheel (1) for limited distant (X3);
the distant (X3) equals the length of the column (12-6-1);

generating a rotation energy = R3*X3 =E3; symmetrically, each W becomes around the lower point of cycle, its piston (2-6) gives the wheel (1) rotation energy E3; and the energy E3 effecting on the wheel (1) to continue rotating at critical situation of W.

**110.Claim.** The roller group (17-a) as in any of claims 64,65,62 or 1, wherein:

Whenever, the weight (4) of K1 around the lower point, its lever (5) touches the roller (17-a);
the roller (17-a) pushes the lever (5), generating R1 figure (12);

R1 may resists the rotation; and
R1 uplift W1 to up, during rotation;
a horizontal direction of R1 depending on the friction and the tanged degree, so it is very small related to W; a vertical direction of R1 uplift W1;
during this step, the wheel (1) falling down 0.5x (during pressing on the piston (2-1) of the opposite W3 at upper point);

after W1 leaving the roller (17-a), the wheel (1) loos some energy against R1; and
gained decreasing of arm on the left side of cycle, around (3.5X to 5.5X) at least.

**111.Claim.** The piston (2-4) as in any of claims 106,105,104, ,84,83, 81, 39 or 2, wherein:

at the upper half cycle, the piston (2-4) lost some of its pressure through input (6-4); and
at the lower half cycle, the input valve (6-4) allows the over amount of the fluid to pass toward the piston (2-4) of (K2); and
allowing the reinjection of the over amount of fluid to piston (2-4), by part B pressure; and
the piston (2-4) restores its pressure.

**112.Claim.** The main holder (H) as in any of claims 10,1, wherein:

two rigid holders, with tall legs, fixed with a constant;
carries the device; and
fixed the axial bar (10) very well.

**113.Claim.** Part B of K1 as in claim 109 or 107 or 106 or 105 or 104 or 103 or 101 or 2, wherein:

after the weight (4) of K1 passing the lower point of the cycle, wherever part B is hanged with group (J1);
it completely reinjects the fluid in the piston (2-1); and
the tail of the lever (5) of K1 retouches the wheel (1).

**114.Claim.** The torque arm R of the weight (4) as in claim 60 or 57 or 46 or 45 or 32 or 26 or 5 or 2, wherein:

after the weight (4) passing the lower point of cycle,
continue rotate up by two effecting:

the first effect is the other weights (4) on the right half side); and
the sconed effect is the piston (2-6), when the villosity decreasing;
the weight (4) approaches to the wheel (1), decreasing the torque arm R for the left side of the cycle.

**115.Claim.** An additional positive torque on the wheel (1) as in claim 105 or 104 or 103 or 101 or 94 or 47 or 2, wherein:

W1 with the additional torque arm $R_1$ generates additional positive torque on the right half side of the wheel (1);
the additional positive torque effects with the wheel's rotation;

whenever the negative torque effects against the rotation; and the additional positive torque at moment equals:

(The force of gravity of the weight) * (the torque arm) = $W_1$ * sine *(5X variable to Y), where $\theta$ is the tendency degree with the vertical line depending on the position of $W_1$:

where g is the gravity acceleration;

where W= mass of the weight * g = M*g.

**116.Claim.** the roller (17-b) as in any claims 110,77,65,64 or 1, wherein:

after W1 leaving the roller (17-a), the lever (5) touches the roller (17-b), compressing the spring (48) for a limited distant; and

increasing the torque arm 0.2X at the beginning (assumption); generating reaction R2 on the wheel (1), pushing it to up;

R2 in the beginning is bigger than W;

effecting on the wheel (1), by the tail about (10 to 20) degrees, depending on distant Y and the position of the roller (17-b);

decreases the torque arm R during rotation; and pushes up the wheel (1).

**117.Claim.** An additional negative torque of the weight (4) ofK1 as in claim 115 or 114 or 113 or 2, wherein:

during rotation up by effecting of the additional positive torque of the other groups K; and

at the lower left quarter of the cycle, the weight $W_1$ with the torque arm (variable from Y to X) generates an additional negative torque on the wheel (1).

**118.Claim.** The springs (21) of K1 as in claim 114 or 113 or 55 or 49 or 2, wherein:

during the weight (4) of K1 approaching to the wheel (1), the lever (5) compresses the springs (21) of (J1) and (J2), by the first disc (34) of each group (J1) &(J2).

**119.Claim.** A complete cycle of the group K1 as in any of the previous claims, wherein:

for complete one cycle whenever, the weight $W_1$ of K1 rotates down from the upper point and comes back to it;

as the weight (4) of K1 effects on the wheel (1); and generated the additional positive and the negative torques

during the cycle, where the additional positive torque greater than the negative torque;

the positive torque effected for (155 to 165) degrees; while the negative torque effected for (195 to 205) degrees, without considering the sconed process of roller (17-b); the $\Sigma$ of two torques is positive on the wheel for one cycle E1, but not enough to continue rotating for one cycle, with the losses;

the piston (2-6) effected on the wheel (1) by energy E3; for at least (five degrees) to keep the villosity of the wheel (1) during the effecting of the resist reaction R1; and

the roller (17-b) effected on the wheel (1) by reaction R2,

generating energy E2;

decreasing the negative torque arm (without losses); then, the other side W3 and W4 became able to rotate the wheel (1), they have longer torque arm on the right side.

the $\Sigma$ E1+E2+E3> $\Sigma$the required energy to rotate the wheel + the losses of the friction, piratically.

**120.**Claim. The pistons (2-1) of K as in any claims 74, 61, 11, 8, 7,6 or 2, wherein:

the piston (2-1) transfers the movement of the wheel (1) to the chassis (9) by the springs (18-1).

**121.Claim.** The cylinder (29) as in claim 10 or 2 wherein:

the cylinder (29) rotatable around the bearing roller (31);

the horizontal axis of the cylinder (29) is the same axis of the wheel (27); and

the cylinder (29) supporting the columns (28); and

the cylinder (29) rotatable around the axial bar (10).

**122.Claim.** The bearing roller (31) as in claim 10 or 56 or 2, wherein:

the bearing roller (31) are smooth balls;
surrounded between the cylinder (29) and the bar (10); and
decreasing the friction with the bar (10).

**123.Claim.** The axial bar (10) as in claim 10 or 2, wherein:

the axial bar (10) passes with the axis of the wheel (27);
the axial bar (10) fixed with the main holder (H) very well; and
the axial bar (10) carries the chassis (9).

**124.Claim.** The generating kinetic energy wheel (part A) as in any above claims, wherein:

part A generates a variable kinetic energy depending on the positions of the weights (4); and
part A generates continuous and increasingly kinetic energy, can use it to rotates a suitable generator.

**125.Claim.** The gearbox (60) as in claim 124 or 1, comprising:

two different diameter wheel (61) & (62);
the small wheel coupled with the wheel (27), by belt (50);
the bigger wheel coupled with the generator (70), by belt (51);
the gearbox (60) wherein, maximize the villosity of part A; and transfers it to the generator (70).

**126.Claim.** The generator (70) as in any of above claims, wherein:
during rotating a magnetic pole of the generator (70) around a coil of the generator (70); and

a wire of the coil cutting the magnetic lines; and
generating electricity in the weir.

**127.Claim.** A method for generating kinetic energy (99) comprising:

generating additional positive torque (100) for only one side of the wheel (1);
decreasing the vegetive torque arm (200) on the wheel (1);
transforming the rotation energy (300) into pressure energy;
reusing the pressure energy (400) for support rotation.

**128.Claim.** A method of generating additional positive torque (100), comprising:

using define form for the lever (150) of the weight groups (4), gives the weights positive arm for long distant on one side than the distant for the negative on other side;
rotating the wheel (1) (110) by the additional torque;
increasing torque arm (120) of the weights (4) by gravity, for only one side of the wheel (1);
reinjecting the fluid (130) in the pistons (2-1); and
exchanging the weights effecting (140) on the wheel (1).

**129.Claim.** A method of using define form for the lever (150) as in 128 or 127 or 119 or 1, comprising:

using the form of the lever (5), for the weight groups;
the form of the lever allows W going far away from the wheel (1), after (40 to 45) degrees from the upper point of the cycle;

increasing the additional torque arm; and
decreasing the additional torque arm to 0.5X, after W passing the lower point by (40 to 50) degrees (depending on lever length);

the effecting degrees of the additional positive torque arm equals (125 to 135) degrees related to (50 to 40) for other side; and
giving the wheel (1) energy to rotates from the normal balance situation, till balance on another situation.

**130.Claim.** The method for generating additional torque (100) as in claim 127 or 119 or 1, comprising:
giving the weights (4) (101) additional torque arm for only one side, the right side for example;

**131.Claim.** The method for giving the weights (101) additional torque arm, comprising:
moving up the weight (4) (102) by the piston (2-2).

**132.Claim.** The method for moving up the weight (4) (102) as in claim 131or 130 or 119 or 1, comprising:

generating fluid pressure (103) inside the piston (2-1);
allowing the pressured fluid (104) passing to push the piston's (2-2) column, at a certain position; and
moving up the weight (4) (102) by the piston's (2-2) column for a distant 5X.

**133.Claim.** A method for generating fluid pressure (103) as in claim 132 or 130 or 127 or1, wherein:

loading all the weights of part E (105) on the piston's column (2-1), whenever vertically up;
pressing all the weights of part E (106) on the piston's
column (2-1), generating pressure on the piston's fluid; and moving the piston's column (2-1) down (109) for a distant X.

**134.Claim.** A method for allowing the pressured fluid (104) passing at a certain position as in claim 132 or 130 or 119 or1, wherein:
using a position valve method (107), depending on the position valve (7-1) to control the position to open the valve (7-1).

**135.Claim.** A method of the position valve (107), comprising:

rotating the outer cylinder (41) (710) of valve (7) with the wheel (1);
preventing the inner cylinder (42) from rotating (720) by the hanged weight (44); and
meeting the two cylinder's holes each other (730), opening the flow way at a certain position.

**136.Claim.** The method for rotating the outer cylinder (41) (710) as in any of claims 135,129,119,127 or 1, wherein:

the position valve cylinder (41) coupled with the nozzles of pistons;
the cylinder (41) rotating with the wheel (1) around the axis of the wheel (1).

**137.Claim.** The method for preventing the inner cylinder (42) from rotation with the cylinder (41) as in any of claims 136,135,129, 127 or 1, wherein:
the hanged weight (44) fixed the short column (43), preventing the cylinder (42) from rotation.

**138.Claim.** A method for moving up the weight group (4) (102) as in claim 132 or 131or 119 or 1, wherein:

pressing the crown of piston (2-2) (1021) by the pressured fluid; and
pushing up column (12-2), by the pressured fluid (1022);
moving each of column (12-2) and the weight group (4) up (102) a distant5X, by the pressured fluid;
giving the weight (4) additional torque arm (101); and
generating additional torque (100), by the additional torque arm.

**139.Claim.** A method for rotating the wheel (1) (110) as in claim 128 or 119 or 1, wherein:

generating different torques (111), by the additional torque on the left and right side of the wheel (1); and
rotating the wheel (1) (110) by the collected torque.

**140.Claim.** A method for increasing torque arm (120) of the weights (4) as in claim 128 or 119 or 1, wherein:

whenever the weight (4) above the lever's hinge (5);
during rotation, the gravity pulling the weight down (121) away from the wheel (1); and
increasing torque arm (120) of the weights (4) by gravity, for only one side of wheel.

**141.Claim.** A method for reinjecting the fluid (130) in the piston (2-1) as in claim 128 or 119 or 1, wherein:

whenever the weight (4) above the lever's hinge (5);
during rotation, the gravity pulling the weight (4) (121) down;
the weight (4) pressing on the piston (2-3) of (K2) (131) by the tail of the lever (5) of K1; and
reinjection the fluid (130) in piston (2-1) of (K2).

**142.Claim.** A method for exchanging the weights effecting (140) on the wheel (1) as in any of claims 141,128,127,119 or 1, wherein:

whenever, each weight (4) arriving the upper point of the cycle, they exchange their positions and their functions;
they gain additional torque arms and additional torques;
they effecting on the wheel (1) by additional torques on the right side of the wheel (1); and
generating continuous and increasingly kinetic energy.

**143.Claim.** A method for decreasing the vegetive torque arm (200) on the wheel (1), comprising:

pushing the lever (5) by the roller (17-a) (210), at the first; and
pushing the lever (5) by the roller (17-b) (220).

**144.Claim.** A method for pushing the lever (5) by the roller (17-a) (210) as in any of claims 143 or 119 wherein:

pushing the lever (5) up with the weight group (4), with some resistance for rotation, for (10) degrees;
reducing the negative torque arm, during rotation.

**145.Claim.** A method for pushing the lever (5) by the roller group (17-b) (220) as in claim 144, 143, 119 or 1 wherein:

after lifting W up by roller (17-a), the lever (5) compressing the roller (17-b) for only limited distant (0.2X) maximum; and compressing the spring (48);
generating positive reaction (for up) on the wheel (1); and
the roller group (17-b) pushes the lever (5) during rotation; and decreasing the negative torque arm of the weight (4).

**146.Claim.** A method for transforming the rotation energy (300) into pressure energy, wherein:

using weight group (4), by rotating the cylinder (4-1), the piston (2-5) and the lever (4-5);
while the part (4-8) is constant direction, during rotation;
the spring (18-5) pulls the lever (4-5), filling the piston (2-5) by fluid;
the part (4-8) presses on the lever (4-5), whenever, the lever (4-5) passing under it;
the piston (2-5) presses its fluid inside the pipe (4-3); and
transforming the rotation energy of the cylinder and pistons into pressure energy inside the pipe (4-3); and
the pipe (4-3) presses the fluid into piston (2-6-2) again.

**147.Claim.** A method for reusing the pressure energy (400) for supporting the wheel rotation as in any of claims 146, 127, 119 or 1, wherein:

the pressure of the pipe (4-3) becoming greater than the pressure of the piston (2-6-2), during opening the valve (7-4); and
the spring (21-6-2) loos some of its pressure;
the pressure of the pipe (4-3) reinjects the fluid of the piston (2-6-2) into it,
depending on the area of the input valve (6-8);
the piston (2-6-2) reuses the pressure energy to push the column of piston (2-6-1); and

the column of the piston (2-6-1) pushes the barrier roller (37); generating a reaction on the piston (2-6); and pushing the wheel (1);

the amount of the fluid of piston (2-6-1) recycling into the

cylinder (4-1), repressured again; and

continue reinjecting the fluid during all the cycle, for each weight group (4).

Rail shape of device

Europäisches
Patentamt

European
Patent Office

Office européen
des brevets

# EUROPEAN SEARCH REPORT

Application Number

EP 21 02 0250

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 498 136 A1 (KARRAMANOUKIAN HAROUTOUN [SY]) 12 August 1992 (1992-08-12)<br>* the whole document *<br>----- | 1-4 | INV.<br>F03G7/10 |
| X | ES 1 076 141 U (CASTILLO MARTINEZ MANUEL [ES]) 8 February 2012 (2012-02-08)<br>* the whole document *<br>----- | 1-4 | |
| X | DE 20 2011 051183 U1 (ZIVKOVIC BRONISLAV [DE]) 29 December 2011 (2011-12-29)<br>* the whole document *<br>----- | 1-4 | |
| X | US 10 361 604 B1 (SKERLAN JIM [CA]) 23 July 2019 (2019-07-23)<br>* the whole document *<br>----- | 1-4 | |
| X | US 2020/217295 A1 (MUELLER ERWIN [DE]) 9 July 2020 (2020-07-09)<br>* the whole document *<br>----- | 1-4 | |

**TECHNICAL FIELDS SEARCHED (IPC)**

F03G

The present search report has been drawn up for all claims

| Place of search | Date of completion of the search | Examiner |
|---|---|---|
| Munich | 4 May 2022 | Alquezar Getan, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 02 0250

This annex lists the patent family members relating to the patent documents cited in the above-mentioned European search report.
The members are as contained in the European Patent Office EDP file on
The European Patent Office is in no way liable for these particulars which are merely given for the purpose of information.

04-05-2022

| Patent document cited in search report | | Publication date | Patent family member(s) | | Publication date |
|---|---|---|---|---|---|
| EP 0498136 | A1 | 12-08-1992 | NONE | | |
| ES 1076141 | U | 08-02-2012 | ES 1076141 U | | 08-02-2012 |
| | | | WO 2013072538 A1 | | 23-05-2013 |
| DE 202011051183 | U1 | 29-12-2011 | NONE | | |
| US 10361604 | B1 | 23-07-2019 | NONE | | |
| US 2020217295 | A1 | 09-07-2020 | CN 110914542 A | | 24-03-2020 |
| | | | DE 102017115123 A1 | | 26-04-2018 |
| | | | EP 3649344 A1 | | 13-05-2020 |
| | | | JP 2020525711 A | | 27-08-2020 |
| | | | US 2020217295 A1 | | 09-07-2020 |
| | | | WO 2019008043 A1 | | 10-01-2019 |

EPO FORM P0459

For more details about this annex : see Official Journal of the European Patent Office, No. 12/82